# EUROPEAN PATENT APPLICATION

(11) **EP 2 461 205 A2**
(43) Date of publication of application: **06.06.2012**
(21) Application number: 11009163.4
(22) Date of filing: 18.11.2011
(51) Int. Cl.: G02F 1/13357, G02B 6/00

(54) **Backlight device and image display using the same**

(30) Priority: 03.12.2010 JP 2010269876
(71) Applicant: Hitachi Consumer Electronics Co., Ltd., Tokyo 100-0004 (JP)
(72) Inventor: Nagayoshi, Mayumi, Chiyoda-ku Tokyo 100-8220 (JP); Ohuchi, Satoshi, Chiyoda-ku Tokyo 100-8220 (JP); Inoue, Hajime, Chiyoda-ku Tokyo 100-8220 (JP); Kubota, Hidenao, Chiyoda-ku Tokyo 100-8220 (JP)
(74) Representative: Strehl Schübel-Hopf & Partner

(57) **Abstract**

A backlight device (3) includes light emitting diodes (LED's) (7) and a plate-like light guide plate (4) which guides light from the light emitting diodes (7) to a liquid crystal panel (1). Grooves (6) are disposed on the back of the light guide plate (4) and the light emitting diodes (7) are disposed in the grooves (6). The light emitting diodes (7) disposed in the grooves (6) are arranged so that light emission direction thereof is parallel with light emission plane of the light guide plate (4). First optical pattern (10) is disposed on first side opposite to light emission plane of light emitting diodes (7) and second optical pattern (11) is disposed on second side opposite to the back of light emitting diodes (7). The optical patterns are formed into minute prism array or lens array, for example.

## Description

### BACKGROUND OF THE INVENTION

The present invention relates to a backlight device which irradiates a liquid crystal panel with light and an image display using the same and more particularly to a backlight device which converts light from light source such as, for example, light emitting diodes (LED's) into surface light to irradiate the liquid crystal panel therewith and an image display using the same.

A backlight device for an image display using a liquid crystal panel as a display device uses light emitting diodes as a light source thereof in order to conform to energy saving and environmental regulation. Light emitting diodes are substantially point-like light sources and accordingly light from light emitting diodes is converted into surface light by means of plate-like light guide plate made of transparent resin, for example, to irradiate liquid crystal panel side with surface light, so that depth (thickness) of the backlight device can be made thinner and wide area can be irradiated.

JP-A-2006-236701, for example, is known as a prior art of such a backlight device using light guide plate. JP-A-2006-236701 discloses that plural depressions formed in bottom plane of light guide plate in longitudinal direction corresponding to horizontal direction are provided in vertical direction and plural side-emission type light emitting diodes are disposed in the respective depressions, so that light from light emitting diodes is reflected in light guide plate to irradiate the liquid crystal panel side.

### SUMMARY OF THE INVENTION

In JP-A-2006-236701, light having the strongest intensity out of light from light emitting diodes mounted in depressions, that is, light near optical axis of light emission plane of light emitting diodes travels straight within light guide plate and reaches package on the back (surface opposite to light emission plane) of light emitting diodes mounted in depressions. This light having strong intensity is mostly absorbed in package on the back of light emitting diodes to be loss of light. Accordingly, unevenness in brightness occurs in the vicinity of depressions and the picture quality of displayed image is deteriorated. Further, temperature of light emitting diodes rises to thereby reduce the luminous efficiency of light emitting diodes.

It is an object of the present invention to provide technique suitable for reduction of unevenness in brightness in backlight device in which liquid crystal panel is irradiated with light from light sources such as light emitting diodes by means of light guide plate.

According to the present invention, a backlight device comprises light emitting diodes and a plate-like light guide plate which guides light from the light emitting diodes to a liquid crystal panel. Depressions are disposed on the back of the light guide plate and the light emitting diodes are disposed in the depressions. The light emitting diodes disposed in the depressions are arranged so that light emission direction thereof is parallel with light emission plane of the light guide plane. Optical patterns are formed on first side of the depressions which light from the light emitting diodes enters and on second side opposite to the first side.

The optical patterns may be surface subjected to roughening processing, for example, or may be formed into minute prism array or lens array.

Further, diffuse reflection members may be disposed in parts corresponding to the depressions on the side of light emission plane of the light guide plate.

According to the present invention, unevenness in brightness or increased temperature of light emitting diodes can be suppressed and image with high picture quality can be provided.

Other objects, features and advantages of the invention will become apparent from the following description of the embodiments of the invention taken in conjunction with the accompanying drawings.

### BRIEF DESCRIPTION OF THE DRAWINGS

Fig. 1 is an exploded view schematically illustrating the whole structure of an image display;
Fig. 2 is a sectional view in vertical direction of a backlight device 3 according to an embodiment of the present invention;
Fig. 3 shows a light guide plate 4 viewed from above;
Fig. 4 shows an example of first optical pattern 10 and second optical pattern 11 according to an embodiment of the present invention;
Fig. 5 shows another example of first optical pattern 10 and second optical pattern 11 according to an embodiment of the present invention;
Figs. 6A and 6B show modification examples of grooves 6 formed in light guide plate 4, respectively;
Figs. 7A to 7D show modification examples of diffuse reflection member 5 provided in light guide plate 4, respectively;
Figs. 8A and 8B show examples of minute patterns formed in light emission plane of light guide plate 4, respectively; and
Fig. 9 is a diagram schematically illustrating circuit configuration of the image display.

### DESCRIPTION OF THE EMBODIMENTS

A backlight device (or illumination device) and an image display using the backlight device according to an embodiment of the present invention are now described in detail with reference to the accompanying drawings. Elements having the same function and structure are designated by like reference numerals throughout the drawings and duplicate description is omitted.

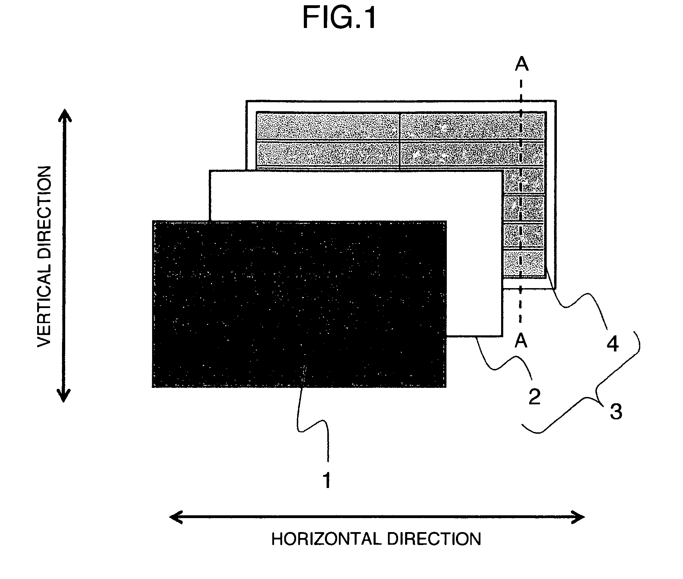

Referring first to Fig. 1, an outline of the whole configuration of the image display using the backlight device according to the embodiment is described.

In Fig. 1, the image display includes a liquid crystal panel 1 and a backlight device 3, which further includes an optical sheet group 2 and a light guide plate 4. The light guide plate 4 converts light from point light sources such as light emitting diodes into surface light from surface light source to be emitted. The optical sheet group 2 contains, for example, diffusion plates, prism sheets and brightness improving sheet if necessary and makes light from light guide plate 4 uniform to irradiate liquid crystal panel 1.

The liquid crystal panel 1 controls transmissivity of liquid crystal pixels in accordance with inputted image signal to modulate light from backlight device 3 for each of liquid crystal pixels. Thus, image is formed in liquid crystal panel 1 in accordance with inputted image signal.

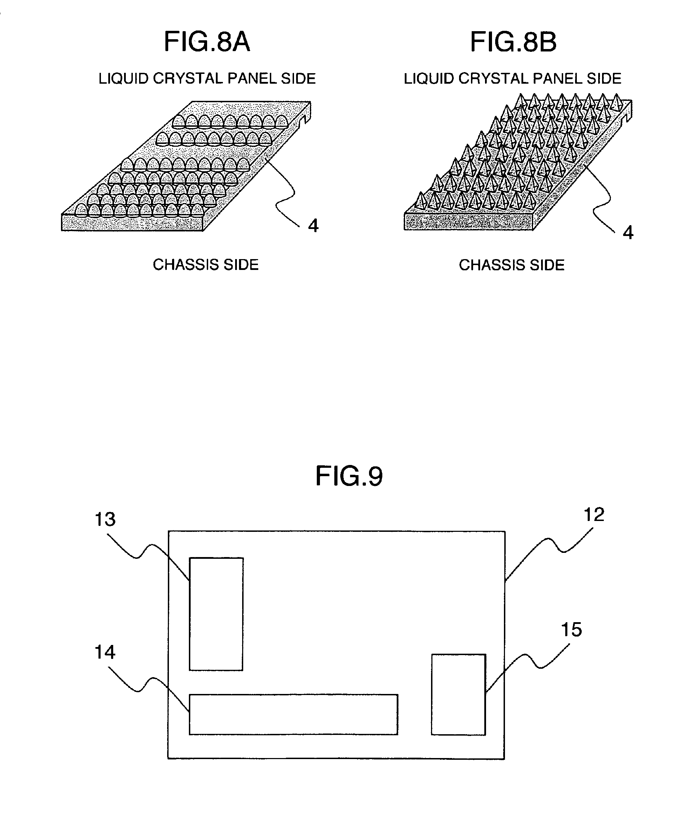

Referring now to Fig. 9, an outline of circuit configuration of the image display is described. Fig. 9 is a diagram showing the back of the image display. Power supply circuit 13 for supplying electric power to respective parts of the image display, image processing circuit 14 containing decoder and picture quality adjustment circuit for processing image signal supplied to liquid crystal panel 1 and CPU functioning as control circuit, and LED driver substrate 15 for driving light emitting diodes (LED's) constituting light sources of backlight device 3 are mounted in chassis 12 holding backlight device 3. CPU of the image processing circuit detects characteristic (brightness) of image signal and supplies control signal for controlling intensity of light of light emitting diodes to the LED driver substrate 15 to thereby make it possible to perform area control described later.

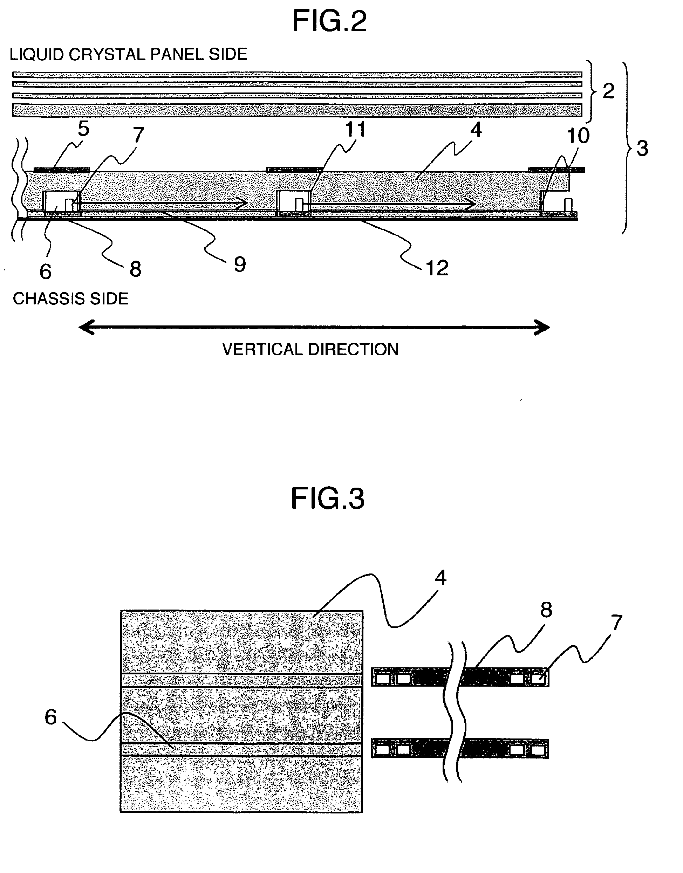

Referring now to Fig. 2, the backlight device 3 according to the embodiment used in the image display constructed above is described in detail. Fig. 2 is a sectional view taken along A-A of backlight device 3, that is, a sectional view in vertical direction (in longitudinal direction or up-and-down direction) of the image display. In Fig. 2, light emitting diodes 7 constituting light sources are mounted on light source substrates 8 and these light source substrates 8 are attached to the back of plate-like light guide plate 4. The light guide plate 4 to which light source substrate 8 is attached is mounted on chassis 12 made of metal, for example, by means of screws or pins penetrating chassis 12 and light guide plate 4. In the embodiment, light emitting diodes 7 are side-view type (side light emitting type) light emitting diodes which emit white light and have light emission direction parallel to electrode surface and emit light in direction of arrow (that is, in vertical direction of image display) in Fig. 2. Arrows from light emitting diodes 7 shown in Fig. 2 show optical axis direction of light emitting diodes and are parallel to light emission plane of light guide plate 4. This arrow direction, that is, optical axis direction is direction in which light having strongest intensity is emitted. Further, in this example, light emitting diodes 7 are plural in number and are arranged in depth direction of the drawing (that is, in horizontal direction of the image display).

A plurality of depressions 6 (hereinafter also referred to as "grooves") which are formed to extend in horizontal direction of the image display, for example, are disposed on the back of light guide plate 4, that is, on the surface opposite to chassis 12 of light guide plate 4. Light guide plate 4 has substantially fixed thickness except the grooves 6. Light emitting diodes 7 mounted on light source substrates 8 are disposed in grooves 6. Light emitting diodes 7 disposed in grooves 6 emit light in the same direction, here in right direction of the drawing. Light emitted from light emitting diodes 7 disposed in grooves 6 enters the side opposite to light emission plane of light emitting diodes 7 (hereinafter this side is referred to as "incidence side"). Light diffused by incidence plane diffusion parts 11 travels within light guide plate 4 and are emitted from light emission plane of light guide plate 4 while being reflected and refracted by the back and the light emission plane (plane opposite to liquid crystal panel 1) of light guide plate 4.

Further, reflection sheet 9 is disposed on the back of light guide plate 4, so that light passing through the back of light guide plate 4 and traveling toward chassis is reflected by reflection sheet 9 to be returned to light guide plate 4. Here, one reflection sheet 9 is disposed for one light guide plate 4. Reflection sheet 9 has holes formed in parts corresponding to places where light emitting diodes 7 are disposed and light emitting diodes 7 are put into grooves 6 through the holes from below (from chassis side). The upper surface (reflection surface) of reflection sheet 9 is disposed on the chassis side lower than lower end of light emission plane of light emitting diodes 7. Furthermore, it is desirable that transmissivity of reflection sheet 9 is smaller than or equal to 4 % at maximum, so that light is diffused and reflected by reflection sheet with high efficiency.

Fig. 3 schematically illustrates light guide plate 4 of the backlight device constructed above together with positional relation to light source substrates 8. In Fig. 3, in order to easily understand the positional relation between light guide plate 4 and light source substrates 8, light source substrates 8 are shown on the right side of light guide plate 4 in adjacent thereto, although light source substrates 8 are actually disposed on the back of light guide plate 4.

As shown in Fig. 3, grooves 6 are formed to extend in horizontal direction of the image display. Further, in this example, two grooves 6 are formed in one light guide plate 4. Oblong rectangular light source substrates 8 extending in horizontal direction of the image display are attached on the back of light guide plate 4 in a corresponding manner to grooves 6. Moreover, a plurality of light emitting diodes 7 are arranged on light source substrate 8 along longitudinal direction of light source substrate 8 and light source substrate 8 is attached to light guide plate 4 so that light emitting diodes 7 are disposed in groove. As described above, light emitting diodes 7 are of side-view type and emits light toward above from under of the drawing.

One to three out of the plurality of light emitting diodes 7 mounted on light source substrate 8 are defined to be one control unit and if intensity of light is controlled in accordance with brightness of image for each control unit, light intensity of backlight can be controlled partially, that is, area control can be performed. For example, 15 light emitting diodes are mounted on one light source substrate 8 and 2 light emitting diodes are defined to be one control unit. In addition thereto, if light source substrate 8 is also disposed in lower end of light guide plate 4, light guide plate 4 can be divided into 15 areas in the structure of Fig. 3 to perform area control. For example, when brightness of image corresponding to a certain area is dark, light intensity of light emitting diodes 7 corresponding to this area is reduced and when it is bright or light conversely, light intensity of light emitting diodes 7 corresponding to this area is increased. Furthermore, if plural sets of light guide plate 4 and light source substrate 8 constructed as above are arranged two-dimensionally, brightness of more areas can be controlled. For example, if 4 configurations shown in Fig. 3 are arranged two-dimensionally, area control can be performed in 60 areas in total.

The reason that light source substrates 8 are separated without integrating them and are disposed in respective places corresponding to grooves 6 is that distance between light emitting diodes 7 and incidence planes in grooves 6 of light guide plane 4 is prevented from being changed when light guide plate 4 is expanded by heat from light emitting diodes 7. When distance between light emitting diodes 7 and incidence planes is changed, incidence efficiency of light from light emitting diodes 7 is changed largely and this causes unevenness in brightness. In the embodiment, in order to prevent it, light source substrates 8 are disposed in a corresponding manner to grooves 6. By constructed in this manner, since light source substrates 8 are also moved together with thermal expansion of light guide plate 4, distance between light emitting diodes 7 and incidence planes can be maintained to be fixed and occurrence of unevenness in brightness can be suppressed.

In the embodiment, as shown in Fig. 2, diffuse reflection members 5 for diffusing and reflecting light are disposed in places corresponding to grooves 6 of light emission plane of light guide plate 4. Light emitting diodes 7 emit light in direction parallel to light emission plane of light guide plate 4, although light component traveling right above (in Fig. 2, liquid crystal panel side of light emitting diodes 7) of light emitting diodes 7 is contained and light reflected by the side of grooves 6 travels right above light emitting diodes 7. Consequently, as apparent from Fig. 3, parts in which grooves 6 are formed are linearly and locally bright and unevenness in brightness is caused (that is, bright line is formed). This is a primary factor of deterioration of picture quality.

In the embodiment, in order to prevent the above deficiency, light traveling toward liquid crystal panel 1 from grooves 6 is diffused and reflected by the diffuse reflection members 5 and accordingly brightness of parts right above grooves 6 is reduced, so that unevenness in brightness can be reduced. In this example, the diffuse reflection members 5 are disposed on light emission plane of light guide plate 4, although the diffuse reflection members 5 may be disposed on inner side of grooves 6 right above light emitting diodes 7 and opposite to light emitting diodes 7. The diffuse reflection members 5 may be formed of white oblong plate-like sheet or film of resin extending in horizontal direction of the image display so as to cover grooves 6 from light emission plane side of light guide plate 4 and having surface subjected to roughening processing, for example.

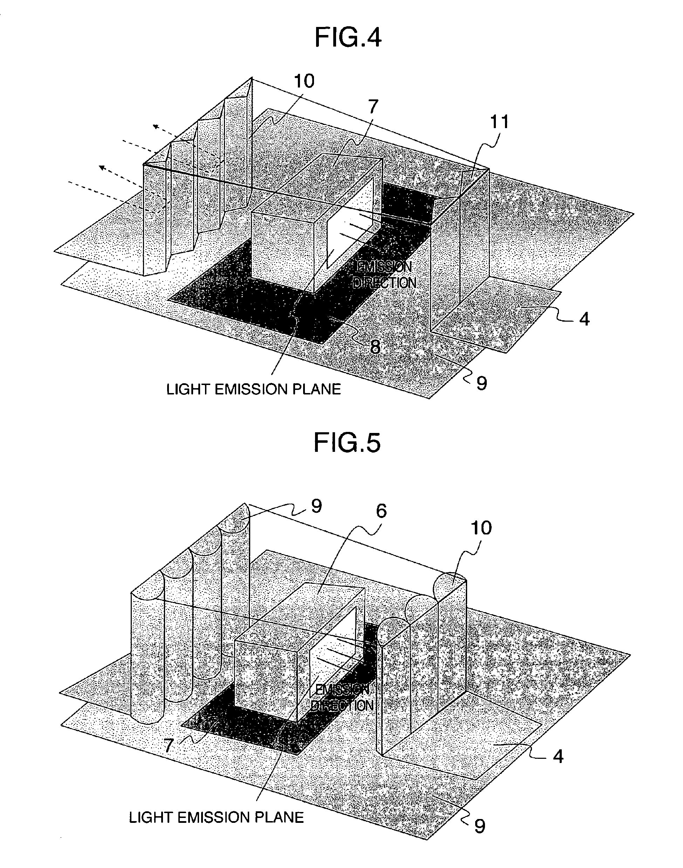

In the embodiment, optical pattern 10 is provided on the side on light incidence side opposite to light emission plane of light emitting diodes 7 in grooves 6 and optical pattern 11 is provided on the side (hereinafter referred to as "side on back") opposite to the back of light emitting diodes 7. Light incident to the sides is diffused or dispersed by optical patterns 10 and 11. The first pattern 10 and the second pattern 11 are described in detail with reference to Fig. 4.

Fig. 4 is an enlarged diagram showing the vicinity of light emitting diode 7 in groove 6 formed in light guide plate 4. As shown in Fig. 4, first optical pattern 10 is provided on incidence side of groove 6 and second optical pattern 11 is provided on the back side thereof. First optical pattern 10 and second optical pattern 11 are formed into minute prism array as shown in Fig. 4.

Since light guide plate 4 is formed into flat board having a fixed thickness except grooves as described above, light emitted with strongest intensity from light emitting diodes 7 disposed within a certain groove 6 travels straight within light guide plate 4 as shown in Fig. 2. This light reaches package on the back of light emitting diode 7 disposed in groove next to the certain groove and most of light amount thereof is absorbed in the package. Accordingly, there is a possibility that unevenness in brightness occurs in the vicinity of groove 6 and temperature of light emitting diodes 7 rises, so that luminous efficiency is reduced. Accordingly, in the embodiment, second optical pattern 11 is formed on the side opposite to the back of light emitting diodes 7 in groove 6, that is, the side on back, so that light in optical axis direction of light emitting diodes 7 is dispersed or totally reflected by second optical pattern 11 to be returned to the inside of light guide plate 4 so that reflection, transmission and dispersion are made again. Consequently, the intensity of light in optical axis direction of light emitting diodes 7 disposed in a certain groove 6 is largely reduced when the light reaches package on the back of light emitting diodes 7 disposed in next groove and accordingly unevenness in brightness and increased temperature of light emitting diodes 7 described above can be reduced.

On the other hand, first optical pattern 10 is formed on incidence side opposite to light emission plane of light emitting diodes 7 in groove 6. The provision of first optical pattern 10 can disperse light from light emitting diodes 7 with relatively short distance to be extended. Accordingly, spatial uniformity of light can be improved and unevenness in brightness can be more reduced. When light emitting diodes which emit light having colors different from one another instead of white light are used as light emitting diodes 7, the colors can be mixed with short distance by first optical pattern 10. As described above, first optical pattern 10 can disperse light from light emitting diodes 7 with short distance, so that it can be prevented parts between light emitting diodes 7 from being dark and unevenness in brightness can be still more reduced.

First and second optical patterns 10 and 11 are formed into prism array in Fig. 4, although the patterns are not limited thereto. For example, as shown in Fig. 5, the patterns may be formed into minute cylindrical lens array or may have surfaces subjected to roughening processing such as, for example, mat processing.

As shown in Figs. 4 and 5, hole is formed in reflection sheet 9, and light emitting diodes 7 and part (peripheral part where light emitting diodes 7 are disposed) of light source substrate 8 are exposed from the hole and light emitting diodes 7 inserted from the hole and exposed therefrom are arranged in space within groove 6.

The common point to Figs. 4 and 5 resides in that the range (range in longitudinal direction of groove 6) where second optical pattern 11 is disposed is larger than the range (range in longitudinal direction of groove 6) where first optical pattern 10 is disposed. Since light in optical axis direction of light emitting diodes 7 is diffused as the light travels in light guide plate 4, light in optical axis direction of light emitting diodes 7 disposed in a certain groove 7 has irradiation range spread when the light reaches the side on back of next groove 6. Accordingly, in order to more diffuse and reflect light in optical axis direction of light emitting diodes 7, it is desirable that range where second optical pattern 11 is disposed is made larger than range where first optical pattern 10 is disposed.

As described above, according to the embodiment, unevenness in brightness between light emitting diodes 7 can be reduced by first optical patterns 10 on the side on incidence side of grooves 6 and unevenness in brightness caused by the fact that light in optical axis direction of light emitting diodes 7 is absorbed in package on the back of light emitting diodes 7 disposed in next groove and increased temperature of light emitting diodes 7 can be suppressed. Therefore, according to the embodiment, unevenness in brightness in case where grooves are formed in light guide plate 4 and light emitting diodes 7 are disposed in grooves to construct the backlight can be reduced.

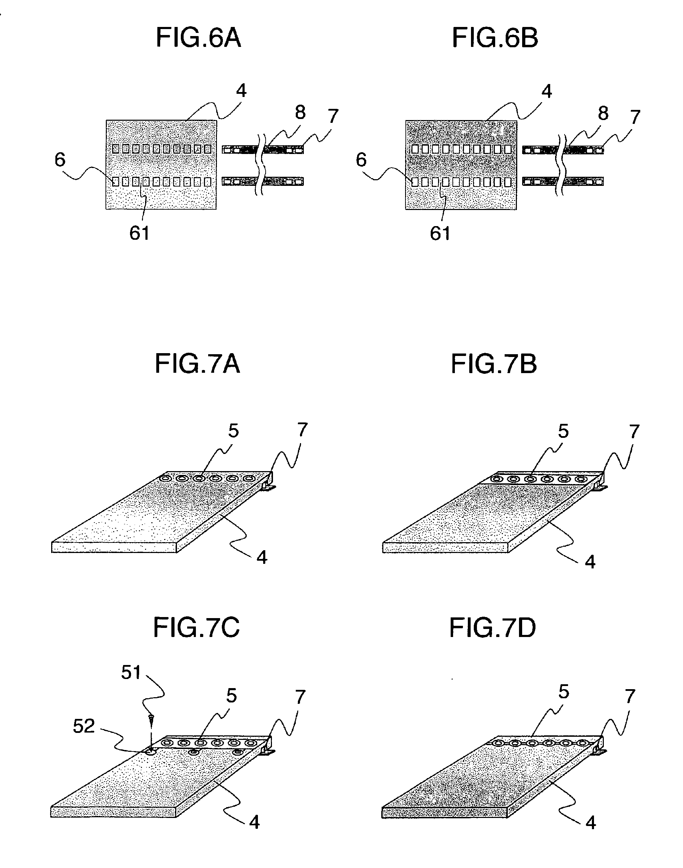

In the embodiment, grooves 6 extend in horizontal direction of the image display continuously as shown in Fig. 3, although the grooves are not limited thereto and may be structured as modification examples shown in Figs. 6A and 6B. For example, as shown in Fig. 6A, grooves 6 may be divided into plural parts by ribs 61 and one to several light emitting diodes 7 may be disposed in each divided groove. Consequently, reduction in strength of light guide plate 4 caused by provision of grooves 6 can be suppressed and crack and deformation produced about grooves 6 can be prevented. Furthermore, in Figs. 3 and 6A, grooves 6 do not penetrate light guide plate 4, although grooves 6 may penetrate light guide plate 4 as shown in Fig. 6B. However, in this case, reduction in strength of light guide plate is increased as compared with the case where grooves do not penetrate light guide plate and accordingly light guide plate 4 is preferably reinforced by ribs 61.

Moreover, diffuse reflection members 5 disposed in opposing relationship with grooves 6 on light emission plane of light guide plate 4 are not limited to the above structure and may be structured as modification example shown in Fig. 7A. For example, as shown in Fig. 7A, diffuse reflection members 5 may be formed by printing made by ink having diffuse reflective characteristic in positions corresponding to grooves 6 on the side of light emission plane of light guide plate 4. The ink preferably has broad optical characteristics in visible wavelength range. Further, as shown in Fig. 7B, diffuse reflection members 5 made of transparent sheet such as transparent acryl sheet or OHP sheet on which printing is made by ink having diffuse reflective characteristics may be stuck on positions corresponding to grooves 6 on the side of light emission plane of light guide plate 4 by means of double-sided adhesive tape, mending tape or adhesive agent. Moreover, as shown in Fig. 7C, threaded holes 52 may be formed in diffuse reflection member 5 and diffuse reflection member 5 may be fixed to light guide plate 4 by screw 51. Furthermore, as shown in Fig. 7D, diffuse reflection members 5 may be formed of optical sheet such as diffusion sheet, diffusion plate and reflection sheet cut to have predetermined size and be fixed to light guide plate 4 by means of double-sided adhesive tape, adhesive agent or screws.

Further, minute pattern such as minute lenses as shown in Fig. 8A and minute prisms as shown in Fig. 8B may be formed on light emission plane of light guide plate 4. Figs. 8A and 8B show parts cut out of light guide plate 4 in a corresponding manner to the above-mentioned area. Light entering light guide plate 4 from light emitting diodes 7 is subjected to repeated total reflection, reflection, transmission and dispersion to have spatial brightness made uniform. Minute pattern may have one-dimensional arrangement or two-dimensional arrangement and shape of minute pattern may be one kind or may have two or more different shapes processed at random. For example, minute lenses and minute prisms may be formed integrally at random to thereby obtain light diffusion effect and light condensation effect at the same time, so that backlight having higher brightness at picture center and uniformity can be realized. The minute pattern may be formed by printing made by ink having diffuse reflective characteristic. Further, minute pattern may be formed on not only light emission plane but also back of light guide plate 4.

Furthermore, in the embodiment, white side-view type light emitting diodes may be used as light source, although point light source such as laser diode (LD) may be used or fluorescent lamp such as hot cathode fluorescent lamp (HCFL), cold cathode fluorescent lamp (CCFL) and external electrode fluorescent lamp (EEFL) may be used. Moreover, light source having plural colors as represented by red (R), green (G) and blue (B) to be mixed to get white light may be used except light source emitting white light. When white light emitting diodes are used, either YAG-W or RG-W may be used. Further, top-view type light emitting diodes which emit light in vertical direction to electrode plane thereof may be used. By using side-view type light emitting diodes as in the embodiment, even when cooling mechanism is provided in substrate although not shown, width of outside frame of backlight can be narrowed, so that the image display having narrow vessel, for example, can be realized. Moreover, package of light emitting diodes 7 may be made of ceramic or resin.

Further, light guide plate 4 is made of PMMA, polycarbonate, polystyrene, zeonor, BMC, OZ, silicone, glass or the like. Zeonor and polycarbonate can prevent moisture absorption and are difficult to cause deformation such as curve due to heat. Furthermore, two or more kinds of materials described above may be combined to form light guide plate. When light guide plate according to the embodiment is formed by molding, molding is performed with the draught taper for groove 6 set to be equal to or larger than 1 degree and smaller than 5 degrees.

Moreover, chassis 12 is made of aluminum, steel, magnesium or titanium alloy and is molded by pressing, die casting or scraping out. Further, chassis may be made of resin such as acryl, PMMA, zeonor, BMC, OZ, polycarbonate, polystyrene and silicone. Alternatively, 2 or more kinds of materials described above may be combined to form chassis.

In addition, optical sheet group 2 is composed of one or plural optical sheets, containing diffusion plates, diffusion sheets, micro-lens sheets, prism sheets, reflection type polarization films and the like, for example. One-dimensional pattern or two-dimensional pattern may be formed on surface of diffusion plates. Printing may be gradationally made on surface of diffusion plates or diffusion sheets by diffusion agent. One or both of sheets on which prisms are formed in longitudinal direction of backlight and sheets on which prisms are formed in short-side direction can be used as prism sheets. In this case, prism sheets having prisms formed thereon in longitudinal direction can be disposed on side of liquid crystal panel 1 to thereby widen viewing angle of the image display. On the other hand, prism sheets having prisms formed thereon in short-side direction can be disposed on side of liquid crystal panel 1 to thereby more improve central brightness of the image display.

One reflection sheet 9 is provided for one light guide plate 4, although construction between reflection sheet and light guide plate is not limited thereto and when plural light guide plates 4 are connected two-dimensionally, one reflection sheet 9 may be used for plural light guide plates 4 connected. When light guide plate 4 is divided into plural areas (optical control unit in area control), one reflection sheet 9 may be used in each area and one reflection sheet 9 having the same size as effective area of backlight or illumination device may be used.

As described above, according to the embodiment, unevenness in brightness in case where light from light emitting diodes is converted into surface light by means of light guide plate can be reduced. Therefore, according to the embodiment, there can be provided the backlight device capable of displaying image with high picture quality and the image display using the backlight device.

It should be further understood by those skilled in the art that although the foregoing description has been made on embodiments of the invention, the invention is not limited thereto and various changes and modifications may be made without departing from the scope of the invention and the scope of the appended claims.

## Claims

1. A backlight device (3) which irradiates a liquid crystal panel (1) with light and is used in an image display,
comprising light sources (7) and a plate-like light guide plate (4) to guide light from the light sources (7) to the liquid crystal panel (1),
plural depressions (6) being provided on back of the light guide plate (4), the light sources (7) being disposed in the plural depressions (6), respectively, and being arranged so that light emission direction of the light sources (7) is parallel with light emission plane opposite to the liquid crystal panel (1), of the light guide plate (4),
optical patterns (10, 11) being formed on first side opposite to light emission plane of the light sources (7), of the depressions (6) and second side opposite to back of the light sources (7), of the depressions (6) to diffuse or disperse light.

2. A backlight device (3) according to Claim 1, wherein
the optical patterns (10, 11) are formed into prism array or cylindrical lens array.

3. A backlight device (3) according to Claim 1, wherein
the optical patterns (10, 11) are formed with rough surface.

4. A backlight device (3) according to Claim 1, comprising
diffuse reflection members (5) provided in parts corresponding to the depressions (6), on light emission plane of light guide plate (4).

5. A backlight device (3) according to Claim 1, comprising
minute pattern formed on light emission plane of the light guide plate (4).

6. A backlight device (3) according to Claim 1, wherein
the minute pattern is formed by minute lenses or minute prisms.

7. A backlight device (3) according to Claim 1, wherein
a set of light sources (7) and light guide plate (4) is arranged plural in number dimensionally.

8. A backlight device (3) according to Claim 1, wherein
the depressions (6) are grooves (6) extending in horizontal direction of the image display and the grooves (6) are formed plural in number in vertical direction of the image display.

9. A backlight device (3) according to Claim 8, wherein
the grooves (6) are sectioned by plural ribs (61).

10. A backlight device (3) according to Claim 1, wherein
the light sources (7) comprise light emitting diodes (7).

11. A backlight device (3) which irradiates a liquid crystal panel (1) with light,
comprising light sources (7) and a plate-like light guide plate (4) to guide light from the light sources (7) to the liquid crystal panel (1),
plural grooves (6) extending in horizontal direction of an image display being provided on back of the light guide plate (4), the light sources (7) being disposed in plural grooves (6), respectively, and being arranged so that light emission direction of the light sources (7) is parallel with light emission plane opposite to the liquid crystal panel (1), of the light guide plate (4),
diffuse reflection members (5) being disposed in parts corresponding to the grooves (6), on light emission plane of the light guide plate (4).

12. A backlight device (3) according to Claim 11, wherein
the grooves (6) are sectioned by plural ribs (61).

13. A backlight device (3) which irradiates a liquid crystal panel (1) with light,
comprising light sources (7) and a plate-like light guide plate (4) to guide light from the light sources (7) to the liquid crystal panel (1),
plural grooves (6) extending in horizontal direction of the image display being provided on back of the light guide plate (4), the light sources (7) being disposed in plural grooves (6), respectively, and being arranged so that light emission direction of the light sources (7) is parallel with light emission plane opposite to the liquid crystal panel (1), of the light guide plate (4),
the grooves (6) being sectioned by plural ribs (61).

14. An image display comprising the backlight device (3) according to any one of Claims 1 to 13.
